# FASCICULE DE BREVET EUROPEEN

(11) **EP 2 823 086 B1**
(45) Date de publication et mention de la délivrance du brevet: **31.05.2017**
(21) Numéro de dépôt: 13715277.3
(22) Date de dépôt: 07.03.2013
(51) Int. Cl.: C23F 14/02, C02F 5/12, C02F 5/10

(54) **PROCEDE DE FABRICATION DE PRODUIT ANTITARTRE**
VERFAHREN ZUR HERSTELLUNG EINES PRODUKTS GEGEN ABLAGERUNGEN
METHOD FOR MANUFACTURING AN ANTI-SCALING PRODUCT

(30) Priorité: 07.03.2012 FR 1252062
(43) Date de publication de la demande: 14.01.2015
(73) Titulaire: Centre National de la Recherche Scientifique (C.N.R.S.), 75016 Paris (FR); Université Abderrahmane Mira, Bejaia 066000 (DZ); Odyssee Environnement, 72510 Requeil (FR)
(72) Inventeur: GAMBY, Jean, 93400 Saint Ouen (FR); BELARBI, Zineb, Béjaia 06014 (DZ); CHAAL, Lila, Bejaia 06000 (DZ); CHAUSSEC, Fabrice, Guénolé, F-72230 Guecelard (FR); MAKHLOUFI, Laid, Bejaia 06000 (DZ); SAIDANI, Boualem, Bejaia 06000 (DZ); TRIBOLLET, Bernard, F-Malakoff 92240 (FR); SOTTA, Bruno, F-92260 Fontenay-sous-Bois (FR)
(74) Mandataire: Ipside
(86) Numéro de dépôt international: PCT/FR2013/050484
(87) Numéro de publication internationale: WO 2013/132193

(56) Documents cités:
- EP-A1- 1 067 214
- BOUANANI S ET AL: "Pharmacological and toxicological effects of Paronychia argentea in experimental calcium oxalate nephrolithiasis in rats", JOURNAL OF ETHNOPHARMACOLOGY, ELSEVIER SCIENTIFIC PUBLISHERS LTD, IE, vol. 129, no. 1, 4 mai 2010 (2010-05-04), pages 38-45, XP027013331, ISSN: 0378-8741 [extrait le 2010-02-04]
- SUHARSO ET AL: "Gambier extracts as an inhibitor of calcium carbonate (CaCO3) scale formation", DESALINATION, ELSEVIER, AMSTERDAM, NL, vol. 265, no. 1-3, 15 janvier 2011 (2011-01-15), pages 102-106, XP027493486, ISSN: 0011-9164, DOI: 10.1016/J.DESAL.2010.07.038 [extrait le 2010-08-21]
- ABDEL-GABER A M ET AL: "Investigation of fig leaf extract as a novel environmentally friendly antiscalent for CaCO3 calcareous deposits", DESALINATION, ELSEVIER, AMSTERDAM, NL, vol. 230, no. 1-3, 30 septembre 2008 (2008-09-30), pages 314-328, XP023610663, ISSN: 0011-9164, DOI: 10.1016/J.DESAL.2007.12.005 [extrait le 2008-08-06]
- ABDEL-GABER A M ET AL: "A natural extract as scale and corrosion inhibitor for steel surface in brine solution", DESALINATION, ELSEVIER, AMSTERDAM, NL, vol. 278, no. 1, 19 mai 2011 (2011-05-19), pages 337-342, XP028272743, ISSN: 0011-9164, DOI: 10.1016/J.DESAL.2011.05.048 [extrait le 2011-05-21]

## Description

L'invention concerne un procédé de fabrication de produit dit « antitartre », c'est-à-dire destiné à retarder l'apparition de tartre.

Plus particulièrement, l'invention concerne un procédé de fabrication d'un tel anti tartre à base d'extraits de plantes destiné à retarder l'apparition de tartres dans des conduits d'écoulement d'eau.

L'utilisation de l'eau est aujourd'hui courante dans de nombreux appareils ou installations, aussi bien au niveau domestique qu'au niveau industriel. Ces appareils ou installations intègrent de nombreux éléments au contact de l'eau lors de leur utilisation.

De tels éléments sont par exemple des conduits, tuyaux d'alimentation ou d'évacuation, robinetterie ou autre dans le cadre de machines à laver le linge ou la vaisselle pour les applications domestiques ou encore dans les circuits de refroidissement industriel fermées ou semi-ouverts.

Cependant, le contact de l'eau avec ces éléments est souvent néfaste dans la durée, ces éléments étant l'objet de dépôts de tartres incrustants au fil de leurs utilisations.

Les dépôts incrustants, par la suite et plus communément appelés tartres, sont essentiellement constitués de sels d'alcalino-terreux (calcium et magnésium) et leur formation est liée à de nombreux paramètres. Parmi ces sels, le carbonate de calcium est l'élément perturbateur principal dans de nombreuses installations immobilières courantes telles que les installations de production et de distribution de l'eau froide et/ou chaude, les installations communales ou départementales de distributions d'eaux, les systèmes de refroidissements d'eaux pour tours aéro-réfrigérantes, etc.

Ces tartres ont de nombreux effets néfastes sur les installations. Parmi ceux-ci, les surcoûts économiques considérables engendrés par le besoin régulier de nettoyage ainsi que la dégradation progressive qu'ils provoquent.

Par ailleurs, l'accumulation de tartres constitue un obstacle pour l'eau circulant où cette accumulation se produit et réduit ainsi progressivement les sections de passage de l'eau ou de tout autre fluide devant circuler à l'endroit de cette accumulation. Cette accumulation peut parfois aller jusqu'à obstruer complètement la section de passage, pouvant engendrer un dysfonctionnement et une dégradation de l'installation.

Afin de lutter contre ce phénomène, il existe de nombreuses méthodes visant à éliminer ces dépôts et nettoyer les installations. Ces méthodes connues sont basées sur des traitements tels que des traitements physiques, des traitements magnétiques ou encore des traitements chimiques à base d'inhibiteurs.

Ces traitements présentent de nombreux inconvénients, en particulier les traitements physiques et magnétiques qui ne sont pas toujours aisés à mettre en oeuvre et n'assurent pas toujours un nettoyage efficace.

Le plus généralement, des traitements chimiques à base d'inhibiteurs sont utilisés en étant directement intégrés à l'eau circulant dans les installations, de manière à empêcher à la source le dépôt.

Cependant, ces traitements chimiques sont, par définition, peu écologiques et représentent un risque pour l'environnement (Cf. Protocole REACH établi par la commission Européenne, sur l'autorisation et commercialisation des substances chimiques, entré en vigueur le 01/06/2007). De plus, il est peu avantageux de supprimer un dépôt dans l'installation en générant un autre dépôt, associant les résidus dudit dépôt dans l'installation et les résidus du traitement chimique utilisé, en sortie d'installation.

Il existe des traitements antitartres issus d'extrait de plantes comme par exemple les traitements décrits dans des publications scientifiques de S.Suharso et al 2011, A.M.Abdel Gaber et al 2008 et A.M.Abdel Gaber et al 2011 cependant leurs efficacités atteignent au maximum 85%.

La présente invention a donc pour but de proposer un procédé de traitement contre le tartre qui soit écologique, intégrant un inhibiteur écologique, ou « inhibiteur vert » qui soit respectueux de l'environnement tout en retardant, empêchant ou supprimant la présence de tels dépôts de tartres.

L'invention a pour objet un procédé de fabrication de produit antitartre, comprenant au moins les étapes suivantes :
- une étape de préparation de matière végétale comportant des saponosides, des oses et holosides et des flavonoïdes,
- une étape d'infusion de ladite matière végétale,
- une étape de filtration de ladite infusion
- une étape de préparation de solution antitartre à partir d'un filtrat obtenue lors de l'étape de filtration
caractérisé en ce que l'étape d'infusion est réalisée à l'aide d'eau portée à ébullition et en ce que la matière végétale provient de plantes d'au moins une des familles suivantes : Caryophyllaceae, Asteraceae,

Illecebraceae ou Urticaceae et en ce qu'il comporte une étape de fractionnement polaire initial réalisé à partir du filtrat obtenu lors de l'étape de filtration. L'étape de préparation de matière végétale permet d'obtenir ladite matière végétale sous la forme la plus adaptée à son traitement ultérieur. En l'occurrence, cette étape comporte une pluralité de sous-étapes afin d'obtenir la matière végétale sous la forme de matière végétale broyée qui est conservée pour utilisation ultérieure.

Selon un mode avantageux de réalisation du procédé de fabrication selon l'invention, la matière végétale est obtenue à partir de plantes de type pariétaire appartenant à l'une des familles suivantes : Caryophyllaceae telle que la Paronychia argentae Lam, Asteraceae telle que l'inule visqueuse, Illecebraceae, Urticaceae ou Anacardiaceae.

Selon une caractéristique, la matière végétale comporte des catéchols.

La matière végétale récoltée à partir de ces familles de plante est broyée dans une première étape de préparation. Pour des raisons de facilité de récolte, et selon la plante sélectionnée, la matière végétale est subdivisée en 3 parties : sommités fleuries, fleurs et feuilles. Chacune des parties de la matière végétale ainsi broyée (indépendamment ou conjointement) est ensuite infusée selon des proportions et des durées choisies, puis filtrée afin de conserver une solution comportant des composants anti tartes sans contenir les résidus de l'infusion.

Les extraits aqueux, éventuellement issus de chacune des parties de la plante, ainsi obtenus comportent les principes actifs de la matière végétale qui constituent l'agent inhibiteur du traitement. Chaque extrait aqueux est lui-même ajouté aux solutions ou eaux susceptibles de générer les dépôts de tartres afin d'en inhiber l'effet entartrant. Par exemple, la solution entartrante utilisée dans les réseaux peut être complétée par l'extrait aqueux selon des proportions de 1mL d'extrait aqueux pour 99mL de solution entartrante.

Le produit antitartre, obtenu par le procédé de l'invention à partir de matières végétales naturelles, ne présente pas d'effets nocifs pour l'environnement. De plus, un tel produit inhibe la formation de tartre de manière efficace comme le montrent les résultats des tests présentés ci après.

Afin d'optimiser les résultats obtenus par le filtrat et d'en isoler les principes actifs agissant en tant qu'agents inhibiteur, le procédé selon l'invention comporte une étape de fractionnement polaire initial réalisé à partir réalisé à partir du filtrat obtenu lors de l'étape de filtration, plus particulièrement de l'extrait aqueux (à partir d'infusions de fleurs ou de sommités fleuries ou de feuilles) obtenus lors de l'étape de filtration. Un tel fractionnement initial est de préférence effectué sur une colonne de fractionnement silice inverse C18, colonne remplie de silice inverse ou mini-colonne commerciale de fractionnement SEP PAK C18.

Le fractionnement initial a l'avantage de procéder à l'exclusion de tous les composés retenus dans la colonne C18 et correspondant aux composés les moins polaires. Ce fractionnement initial peut être considéré comme une phase préparatoire de chromatographie dite « préparative » d'exclusion car les biomolécules qui restent accrochées à la colonne C18 sont pour une bonne partie des espèces qui n'ont aucun effet inhibiteur de tartres voire sont néfastes pour cette inhibition.

La fraction nommée F, correspondant au filtrat non retenu par la colonne C18, est conservée et constitue un premier filtrat présentant les effets inhibiteur désirés.

La fraction F comporte les composés polaires du filtrat obtenu lors de l'étape de filtration. Cette fraction F permet d'inhiber l'entartrage, dans des conditions d'expérience identiques, par rapport à l'infusion brute ou l'extrait aqueux seul. Dans de telles expériences, on entend par temps d'entartrage le temps nécessaire à un recouvrement total d'une électrode dans une solution entartrante par le carbonate de calcium.

Parmi les composés les plus polaires de la fraction F, c'est-à-dire de la solution non retenue par la colonne C18, tous ne participent pas à l'inhibition du tartre et peuvent même amoindrir l'action du ou des composés jouant un rôle dans le mécanisme général d'inhibition.

Afin d'éviter cela, le procédé comporte une étape de fractionnement secondaire effectuée à partir d'une fraction polaire obtenue lors de l'étape de fractionnement initial. La séparation des composés effectuée lors de l'étape de fractionnement secondaire se fait selon le gradient de polarité Le fractionnement secondaire est réalisé sur colonne carbone. Ce deuxième fractionnement sur colonne carbone permet d'affiner la purification du filtrat en obtenant une solution comportant principalement les seuls éléments ayant un effet inhibiteur de tartres. Lorsque la fraction F issue de la colonne C18 est introduite dans la colonne de carbone, les éléments les plus polaires de ladite fraction F sont retenus par ladite colonne carbone. Typiquement, l'introduction dans la colonne carbone de la fraction F, elle même obtenue par introduction de l'extrait brut dans la colonne C18, permet une sélection des éléments de l'extrait brut ayant une polarité intermédiaire, les autres éléments étant écartés de la solution et ne pouvant ainsi pas perturber les capacités inhibitrices de tartres de la solution selon l'invention. Cette étape de fractionnement secondaire peut se faire sur une colonne remplie de charbons actifs ou de mini-colonnes commerciales à base carbone.

Ce fractionnement secondaire est suivi d'une étape de sélection des éléments de polarité intermédiaire issus de l'étape de fractionnement secondaire, c'est-à-dire une sélection des filtrats non retenus par cette colonne. Lors de cette étape de sélection, deux fractions sont préférentiellement retenues, une première fraction est appelée fraction C0 et correspond au filtrat non retenu sur colonne carbone après insertion de la fraction F dans celle-ci et une deuxième fraction appelée par la suite fraction C100 est recueillie après l'introduction d'un éluât composé à 100% d'isopropanol dans la colonne carbone après avoir récolté la fraction C0.

Les fractions C0 et C100 obtenues suite à cette étape de sélection permettent d'obtenir des résultats optimaux, l'inhibition de l'entartrage avec un traitement issu de telles solutions étant plus efficace qu'avec traitement obtenu par simple filtration des matériaux végétaux.

Dans un perfectionnement, permettant l'exclusion de davantage de composés présents dans les fractions C0 et C100 qui ne présentent pas d'intérêts pour la formule finale du ou des inhibiteurs, le procédé comporte une étape de décantation des fractions obtenues par le fractionnement secondaire et une étape de sélection du surnageant obtenu lors de cette décantation. Une étape de décantation en reprenant la fraction C100 ou la fraction C0 permet d'isoler les composés du ou des principes actifs de la solution.

Une sélection est effectuée sur la décantation obtenue et seul le surnageant est conservé selon l'invention. Ce surnageant constitue la phase méthanolique de ladite décantation. Les surnageants obtenus après lyophilisations (issus de la décantation dans 1 mL de méthanol dans C0 puis dans C100) permettent d'améliorer sensiblement l'inhibition du tartre De préférence, la formule brute du composé majoritaire est C₇H₁₃N₂O₂. Cette formule comporte avantageusement des composés minoritaires de formules brutes C₉H₁₇O₂, C₈H₁₃O₃ (absorbance autour de 30 et 18 % respectivement) et des composés très minoritaires de formules brutes C₁₀H₂₁O et C₁₀H₉N₂ (absorbance inférieure à 5%).

Dans une variante de réalisation, l'invention prévoit une purification de la fraction C100 sur colonne échangeuses d'ions. Cette purification améliore également la sélection des seuls éléments inhibiteurs de tartres selon l'invention. Une telle purification de la fraction C100 est par exemple effectuée sur une résine échangeuse d'ions mixte (Mix Bed Resin AG 501-X8, Bio Rad). Cette résine est composée d'un mélange de la phase échangeuse d'anions de type AG 1-X8 et de la phase échangeuse de cations de type AG 50-X8. Les solvants utilisés sont, de manière préférentielle, l'éthanolamine et le triéthanolamine.

Une variante de procédé de séparation par échanges ions, utilise une colonne remplie de gel Sephadex (Sephadex LH 20) équilibré dans le méthanol. Dans cette variante, l'éluât est de préférence un mélange d'eau (10%) et de méthanol (90%) après le fractionnement de C0 et C100, voire un éluat eau (20%)-méthanol (80%).

De préférence, la fraction C100 est purifiée sur une colonne échangeuse d'ion AG501 X8 en utilisant comme éluant l'éthanolamine 1 M à pH 11.6. Cette purification permet d'obtenir une solution présentant un effet inhibiteur important

Avantageusement, le solvant utilisé lors de cette purification comporte des amines. Ainsi, le solvant le plus adéquat pour éluer la molécule active est l'éthanolamine ou le triéthanolamine.

La présence de ces amines améliore de façon conséquente l'inhibition du tartre. De plus, ces amines permettent d'obtenir une solution apte à lutter à la fois contre le tartre et la corrosion dans les installations domestiques et ou industrielles.

Dans une variante du procédé selon l'invention une étape de purification de la fraction F, par au moins une chromatographie de préférence de type HPLC (chromatographie en phase liquide à haute pression), est incluse entre l'étape de filtration et l'étape de préparation de la solution antitartre. Cette variante du procédé permet d'affiner la purification de la fraction F en permettant d'optimiser la concentration de composé inhibiteur « vert » dans la solution antitartre.

L'invention a également pour objet un produit antitartres obtenu par le procédé selon l'invention et plus particulièrement sur un produit antitartre obtenu par le procédé selon l'invention et comportant différentes familles de biomolécules tels que les saponosides, les oses et holosides, les flaonoïdes et éventuellement des catéchols. Le composant majoritaire du produit selon l'invention a de préférence un rapport masse/charge m/z = 157.1 et est de forme brute C₇H₁₃N₂O₂. Cependant, il existe des composés minoritaires de formules brutes: C₉H₁₇O₂, C₈H₁₃O₃, C₁₀H₂₁O et C₁₀H₉N₂.

L'invention porte également sur l'utilisation du produit selon l'invention par ajout dans l'eau circulant dans un appareil ou une installation, éventuellement associé à un produit anti-corrosion filmogène tel que l'éthanolamine ou le triéthanolamine.

La présente invention est maintenant décrite à l'aide d'exemples uniquement illustratifs et nullement limitatifs de la portée de l'invention, et à partir des illustrations ci-jointes, dans lesquelles :
- La figure 1 représente un organigramme des étapes du procédé selon l'invention ;
- La figure 2 représente un graphique montrant les variations de l'intensité du courant comparées pour une surface d'acier avec différentes solutions produites par le procédé de l'invention d'une part, et dans une solution ne comportant pas le produit de l'invention d'autre part.

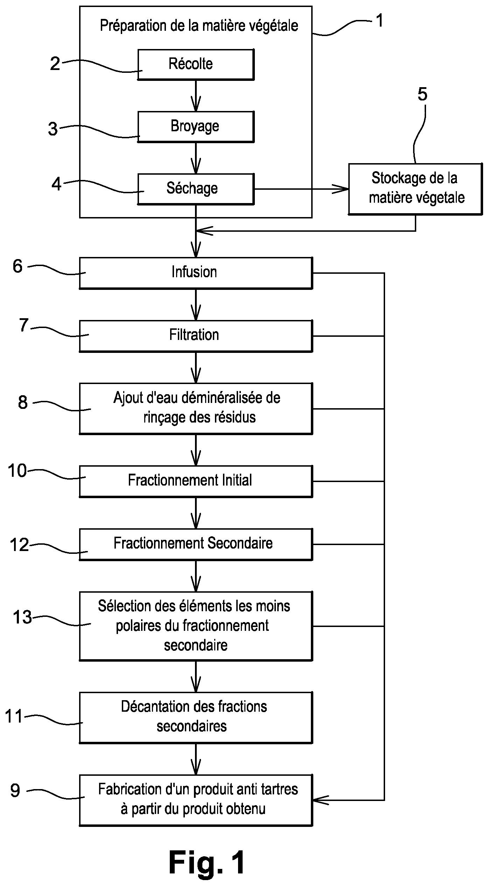

La figure 1 représente un organigramme des étapes du procédé selon l'invention.

Le procédé selon l'invention, permettant de produire un produit anti tartre écologique, comporte une étape de préparation 1 de la matière végétale à base dudit produit. La première phase de cette étape de préparation 1 consiste en une étape de récolte 2 de matière végétale.

La récolte de matière végétale se fait sur la partie aérienne des plantes récoltées, c'est-à-dire sur les sommités fleuries, les feuilles et/ou les fleurs de la plante. La récolte est de préférence réalisée sur des plantes de la famille Caryophyllaceae, ou Illecebracea ou Asteraceae ou Urticaceae.

Une fois la matière végétale récoltée, cette dernière est broyée 3 à l'aide d'un moulin électrique ou tout autre procédé connu de l'homme de l'art permettant d'obtenir une matière végétale broyée d'une taille de l'ordre de 1 ou 2 mm.

Afin d'être conservée de manière optimale pour utilisation ultérieure, la matière végétale broyée est séchée 4 à température ambiante à l'abri de la lumière dans un endroit bien aéré et/ou ventilé. Ce procédé de séchage permet d'éviter d'une part la photo-oxydation, et, d'autre part, la formation de moisissures.

Pour assurer sa bonne conservation, la matière végétale ainsi obtenue est conservée 5 dans des boîtes hermétiquement fermées, de préférence à vide partiel.

Après cette étape de préparation 1 de la matière végétale, le procédé selon l'invention comporte une étape d'infusion 6 de cette dernière. Cette infusion est réalisée dans de l'eau distillée portée à ébullition durant un laps de temps adapté.

L'infusion peut être réalisée avec 20 g de poudre de matière végétale, obtenue lors de l'étape de préparation de cette dernière, infusés dans 100 ml d'eau distillée, portée à ébullition pendant 15 minutes. Dans de telles proportions, l'infusion est réalisée de préférence dans un erlenmeyer de 250 ml refermé en étant au moins partiellement obstrué durant le temps d'infusion, par exemple à l'aide d'un verre de montre.

Une étape de filtration 7 ultérieure permet d'extraire du filtrat obtenu par l'infusion un extrait aqueux dépourvu de résidus, en l'occurrence de résidus de matière végétale infusée. Cet extrait aqueux est éventuellement complété 8 avec de l'eau distillée portée à ébullition afin de compléter le volume perdu par le retrait des résidus. Cette eau distillée a avantageusement été préalablement utilisée pour rincer les résidus de matière végétale avant son incorporation à l'extrait aqueux. Des volumes d'extraits aqueux de 100 ml sont par exemple conservés à l'abri de la lumière dans des flacons hermétiquement fermés.

Cette étape de filtration 7 permet d'éviter la formation d'un dépôt de matière végétale en cas d'utilisation brute de l'infusé.

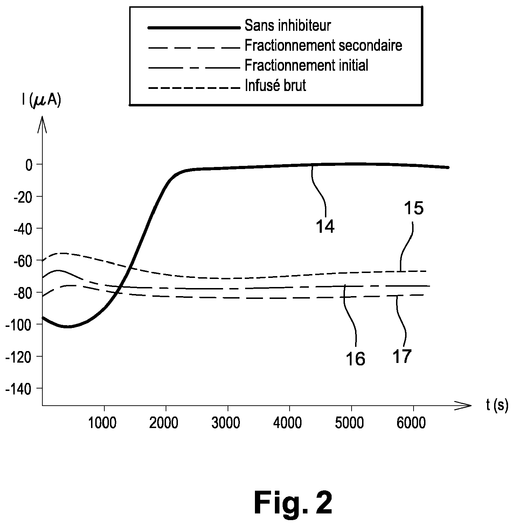

L'extrait aqueux obtenu par ces étapes constitue déjà en soi une solution antitartre, comme le montre les résultats d'expériences présentées en figure 2. Ainsi, une étape de préparation 9 de solution antitartre à partir d'un extrait aqueux obtenu après l'étape de filtration 7 est facilement réalisable en ajoutant 1 ml de l'extrait aqueux pour 99 mL d'eau entartrante.

Dans un perfectionnement, le procédé selon l'invention comporte une étape de fractionnement polaire initial 10. Ce fractionnement est réalisé de préférence sur une colonne Sep-PAK C18 selon le gradient de polarité eau/méthanol à partir de l'extrait aqueux obtenu lors de l'étape de filtration.

L'étape de fractionnement initial 10 consiste à séparer les éléments les plus polaires des éléments moins polaires de l'extrait aqueux. Il est nécessaire pour cela de préparer la colonne C18 ainsi que l'extrait aqueux.

La colonne C18 est équilibrée avec une phase aqueuse acide par introduction de 5 ml d'acide trifluoroacétique à 0.1% (aussi appelé TFA). Cette opération peut être répétée plusieurs fois afin de s'assurer du bon équilibrage de la colonne C18, par exemple à trois reprises.

L'extrait aqueux infusé est lui acidifié avant insertion dans la colonne C18 de manière à obtenir une solution à 0,1% de TFA, par exemple pour 3 ml d'extrait aqueux brut on utilisera 30µL de TFA à 10%.

L'extrait aqueux acidifié est ensuite filtré sur un filtre pour exclure toutes les particules supérieures à 0,2µm, par exemple à l'aide d'un filtre commercial « minisart ».

Cet extrait aqueux acidifié et filtré est introduit dans la colonne C18 qui retient les éléments les moins polaires de l'extrait, les éléments les plus polaires de l'extrait n'étant eux pas retenus par la colonne. L'éluât ainsi obtenu, correspondant aux éléments non retenus par la colonne C18 et appelé par la suite fraction F, comporte les éléments les plus polaires de l'extrait aqueux. Cet éluât est directement utilisable pour la préparation 9 d'un produit anti tartre selon l'invention.

Une telle étape de fractionnement initial 10 présente un intérêt important car elle permet via une étape simple, la seule insertion de l'extrait brut dans une colonne C18, par exemple une colonne de silice inverse C18, d'obtenir une solution excluant une part importante de composés qui n'ont pas d'effet inhibiteur de tartre. De plus, cette étape de fractionnement initial est aisément réalisable à grande échelle par l'utilisation de grandes colonnes C18.

Afin de purifier le plus possible les produits obtenus par le procédé selon l'invention en les limitant aux composants présentant un effet inhibiteur, l'éluât obtenu après le fractionnement initial 10, comportant les éléments les plus polaires de l'extrait aqueux, est utilisé lors d'une étape de fractionnement secondaire 12.

L'extraction lors de ce fractionnement secondaire 12 est basée sur la distribution des composés entre la phase liquide et la phase solide, l'éluant étant un mélange eau/isopropanol. Ce fractionnement secondaire est de préférence effectué sur une colonne carbone DPE Hypercarb, suivant un gradient de polarité isopropanol/eau.

Une étape de sélection 13 est effectuée afin de ne conserver que les éléments les moins polaires de l'éluât obtenu lors du fractionnement initial 10.

Typiquement, le fractionnement est effectué dans un premier temps par introduction dans la colonne de carbone de la fraction F obtenue suite au fractionnement initial 10, la fraction non retenue par la colonne de carbone lors de ce fractionnement secondaire et appelée par la suite fraction C0 étant sélectionnée pour la fabrication du produit antitartre 9.

Dans une variante, suite à l'insertion de la fraction F dans la colonne de carbone, un éluant composé uniquement d'isopropanol est introduit dans ladite colonne carbone. Les éléments recueillis suite à l'insertion de cet éluant constituent une solution appelée par la suite fraction C100 qui peut également être sélectionnée pour intégration dans le produit antitartre, cette fraction C100 constitue une variante de solution antitartre selon l'invention.

Un perfectionnement du procédé selon l'invention permettant une purification plus avancée de la solution obtenue par le procédé selon l'invention prévoit la lyophilisation de la fraction C0 ou de la fraction C100 avant une étape de décantation 11. Les résidus secs des fractions C0 et C100 lyophilisées sont dissouts dans 1 ml de méthanol. Une centrifugation, par exemple de l'ordre de 8 kg pendant 2 min, permet l'obtention d'une décantation avec deux phases : un surnageant et un culot. La phase méthanolique surnageante de cette décantation est conservée pour constituer un produit antitartre écologique et purifié.

Les étapes successives du procédé selon l'invention permettent d'obtenir un produit sous forme de solution comportant des saponosides, des oses et holosides, des flavonoïdes. Dans le cas d'une décantation à partir de la fraction C100, des catéchols en plus des composés cités ci-avant. Selon l'étape du procédé à partir de laquelle la solution est sélectionnée pour insertion dans le produit, d'autres composants sont présents dans ladite solution, cette dernière conservant cependant un effet inhibiteur de tartres.

Un perfectionnement du procédé selon l'invention permet d'affiner la purification de la fraction F en permettant d'optimiser la concentration de solution inhibitrice.

Cette étape de purification de la fraction F issu de ladite filtration prévoit notamment le passage de ladite fraction dans une mini colonne de chromatographie préparatoire de type « Sep pak diol » avec un gradient acétonitrile/eau. La composition du gradient retenue est composé de 60% acétonitrile et 40% eau. L'éluât obtenu est nommé fraction F60.

Par la suite, la fraction F60 est analysée plus finement grâce à une chromatographie HPLC sur une colonne Diol de plus grande capacité et qui permet de séparer et fractionner F60 en fonction du temps. Le fractionnement de la fraction F60 est réalisé pendant 15 minutes à une température de 40°C. Le fractionnement est réalisé à l'aide d'un gradient linéaire :
- à partir d'une solution contenant 100% d'un solvant B (composé d'acétonitrile (90%) et d'eau (10%)) et 0% d'un solvant A (composé d'acétonitrile (10%) et d'eau (90%)) ;
- pour aboutir à l'issue du fractionnement, à une solution contenant 0% du solvant B et 100% du solvant A.

La collecte des composés dont le temps de migration est compris entre 10 min et 11,6 min présente une activité antitartre. Cette fraction est nommée F60_2.

Par la suite, une chromatographie HPLC est effectuée sur la fraction F60_2, dans une colonne Diol, identique à la précédente, permettant ainsi de séparer et fractionner F60_2 en fonction du temps. Lors de ce fractionnement, les solvants sont les mêmes qu'utilisés précédemment. Cependant, le gradient linéaire est cette fois programmé à partir de 100% de B et 0% de A jusqu'à 30% de B et 70% de A, pendant 13 minutes à une température de 40°C. La collecte des composés dont le temps de migration est compris entre 10 min et 11 min présente une activité antitartre. Cette fraction est nommée F60_2_1.

Finalement, la fraction F60_2_1 analysé plus finement par chromatographie HPLC équipé cette fois d'une colonne «Kinetex C18» de grande résolution et qui permet de séparer et fractionner F60_2_1 en fonction du temps. Lors de ce fractionnement, les solvants utilisés sont l'acétonitrile et l'eau. Le gradient est linéaire et programmé de la manière suivante : 100% d'eau et 0% d'acétonitrile jusqu'à 100% d'acétonitrile et 0% d'eau, pendant 6 minutes à une température de 40°C. La collecte des composés dont le temps de migration est compris entre 3,5 min et 4,5 min présente une activité antitartre. Cette fraction est nommée T.

Les fractions F60, F60_2, F60_2_1 et T ont l'avantage d'être débarrassées de composés n'entrant pas dans la formule inhibitrice. De plus elles ont à une concentration avoisinant 1,08x10⁻⁴ mg.L⁻¹. Dans la l'art antérieur, la concentration d'utilisation classique d'un inhibiteur est comprise entre 1 à 10 mg.L⁻¹.

La purification de la fraction F en fraction T permet d'augmenter l'efficacité de l'inhibiteur à des concentrations très faibles pour une efficacité toujours maximale, puisque 100% du tartre est éliminé.

De plus, ces fractions se révèlent toujours efficaces notamment lors de tests en température où les problèmes d'entartrages sont plus problématiques. Par exemple, pour un test d'entartrage réalisé à 20°C, la fraction F60 donne une efficacité optimale à une concentration de 1,08x10⁻⁴ mg.L⁻¹ et à une concentration de 1,3x10⁻⁴ mg.L⁻¹ pour une température de 45°C.

Par ailleurs, l'un des avantages des ces fractions, est qu'elles sont toutes hydrophiles et n'ont pas besoin d'y adjoindre d'additif pour aider à la solubilisation permettant ainsi de réaliser une solution antitartre concentrée de l'ordre du 10⁻⁴ mg.L⁻¹ (10⁻⁴ ppm), ayant une efficacité 100%, pour des températures d'utilisation entre 20 et 45°C.

En outre, les solutions, quelle que soit l'étape à partir de la qu'elles sont sélectionnées, constituent un produit antitartre sous forme de liquide ou solide après une étape de lyophilisation. Ce produit peut être associé à un produit anticorrosion pour lutter contre les deux phénomènes à la fois : dépôt de tartre et corrosion.

La figure 2 représente un graphique montrant les variations de l'intensité du courant comparées pour une surface d'acier avec différentes solutions (15, 16, 17) produites par le procédé de l'invention d'une part, et dans une solution ne comportant pas le produit de l'invention d'autre part (14).

Afin de montrer l'effet inhibiteur du produit obtenu, différents tests d'entartrage par électrochimie on été réalisés.

Dans un premier temps, un test dans une eau naturelle entartrante non traitée a été réalisé afin de servir de témoin (14).

Dans un second temps, les tests sont réalisés avec des traitements à partir des produits pouvant être obtenus aux différentes étapes du procédé selon l'invention.

Les tests sont des tests de chronoampérométrie, un entartrage de l'électrode au fil du temps se traduisant par un recouvrement de l'électrode et une intensité de courant devenant réduite voire nulle.

Les tests sont effectués à partir d'une eau entartrante à 45 °F (degré Français : norme de dureté d'une eau), à une vitesse de rotation de la surface à 500 tours par minute, à un potentiel imposé de E = -1 V/ECS, avec une électrode avec embout acier de 5 mm de diamètre dans 100ml de solution. Les tests sont réalisés sur une durée de 600 minutes.

La courbe témoin 14, en trait continu, correspondant au temps d'entartrage dans l'eau naturelle seule (sans additif antitartres), montre un entartrage complet et homogène du disque central de l'électrode.

La courbe en traits pointillés 15, représentant le temps d'entartrage pour une solution comportant 99 ml d'eau naturelle et 1ml d'extrait aqueux obtenu directement par l'étape d'infusion, montre un recouvrement du centre de l'électrode partiel et inhomogène. L'extrait aqueux ainsi ajouté à une solution entartrante inhibe donc bien l'entartrage de l'électrode.

La courbe en traits discontinus alternés avec des points 16, représentant le temps d'entartrage pour une solution comportant 99 ml d'eau naturelle et 1 ml d'éluât obtenu après le fractionnement initial, montre une absence de recouvrement du centre de l'électrode. L'entartrage avec une telle solution est donc bien inhibé.

Comme le montre la courbe en traits discontinus 17 représentative d'une solution comportant 99 ml d'eau et 1ml de l'éluât obtenu par le fractionnement secondaire, ledit fractionnement secondaire permet d'obtenir une solution assurant une intensité de courant plus grande et inhibe encore l'entartrage.

L'obtention de ces différentes solutions à partir des étapes du procédé selon l'invention permet, par incorporation dans les eaux destinées à circuler dans les installations ou appareils risquant de s'entartrer, du produit obtenu par le procédé, la circulation d'une eau n'engendrant pas d'entartrage indésirable de manière simple, rapide, réalisable à grande échelle, et surtout de manière écologique puisque le produit antitartre est obtenu à partir de plantes.

## Revendications

1. Procédé de fabrication de produit antitartre, comprenant au moins les étapes suivantes :
- une étape de préparation (1) de matière végétale comportant des saponosides, des oses et holosides et des flavonoïdes,
- une étape d'infusion (6) de ladite matière végétale,
- une étape de filtration (7) de ladite infusion
- une étape de préparation (9) de solution antitartre à partir d'un filtrat obtenue lors de l'étape de filtration
**caractérisé en ce que** l'étape d'infusion (6) est réalisée à l'aide d'eau portée à ébullition et **en ce que** la matière végétale provient de plantes d'au moins une des familles suivantes : Caryophyllaceae, Asteraceae, Illecebraceae ou Urticaceae et **en ce qu'**il comporte une étape de fractionnement polaire initial (10) réalisé à partir du filtrat obtenu lors de l'étape de filtration.

2. Procédé selon la revendication 1, **caractérisé en ce que** la matière végétale comporte des catéchols.

3. Procédé selon la revendication précédente, **caractérisé en ce qu'**il comporte une étape de fractionnement secondaire (12) effectuée à partir d'une fraction polaire obtenue lors de l'étape de fractionnement initial.

4. Procédé selon la revendication précédente, **caractérisé en ce que** la séparation des composés effectuée lors de l'étape de fractionnement secondaire se fait selon le gradient de polarité.

5. Procédé selon l'une des revendications 4 à 5, **caractérisé en ce qu'**il comporte une étape de sélection (13) des éléments de polarité intermédiaire issus de l'étape de fractionnement secondaire.

6. Procédé selon l'une des revendications précédentes, **caractérisé en ce que** l'étape de fractionnement initial est effectuée sur une colonne de fractionnement silice inverse C18.

7. Procédé selon l'une des revendications 4 à 6, **caractérisé en ce que** l'étape de fractionnement secondaire est effectuée sur une colonne remplie de charbons actifs ou de mini-colonnes commerciales à base de carbone.

8. Procédé selon l'une des revendications 4 à 7 **caractérisé en ce qu'**il comporte une étape de décantation des fractions obtenues par le fractionnement secondaire et une étape de sélection du surnageant obtenu lors de cette décantation.

9. Produit antitartre obtenu par le procédé de fabrication selon l'une des revendications précédentes.

10. Produit selon la revendication précédente, **caractérisé en ce que** son composant majoritaire a un rapport masse/charge m/z =157.1 et est de formule brute C₇H₁₃N₂O₂.

11. Produit selon la revendication précédente **caractérisé en ce qu'**il comporte des composants minoritaires de formule brute C₉H₁₇O₂, C₈H₁₃O₃, C₁₀H₂₁O et C₁₀H₉N₂.

12. Utilisation du produit selon la revendication 10 pour ajout dans l'eau circulant dans un appareil ou une installation.

13. Utilisation du produit selon la revendication précédente, associé à un produit anti-corrosion filmogène, tel que l'éthanolamine ou le triéthanolamine.

## Patentansprüche

1. Verfahren zur Herstellung eines Kesselstein verhindernden Produkts, das mindestens die folgenden Schritte umfasst:
- einen Schritt der Präparation (1) von pflanzlicher Substanz, die Saponoside, Osen und Holoside sowie Flavonoide enthält,
- einen Schritt des Aufgießens (6) dieser pflanzlichen Substanz,
- einen Schritt der Filtration (7) dieses Aufgusses,
- einen Schritt der Herstellung (9) einer Kesselstein verhindernden Lösung aus einem bei dem Filtrationsschritt erhaltenen Filtrat,
**dadurch gekennzeichnet, dass** der Schritt des Aufgießens (6) mithilfe von zum Kochen gebrachtem Wasser durchgeführt wird, und dadurch, dass die pflanzliche Substanz von Pflanzen aus mindestens einer der folgenden Familien stammt: Caryophyllaceae, Asteraceae, Illecebraceae oder Urticaceae, und dadurch, dass es einen anfänglichen polaren Fraktionierungsschritt (10) umfasst, der ausgehend von dem beim Filtrationsschritt erhaltenen Filtrat durchgeführt wird.

2. Verfahren nach Anspruch 1, **dadurch gekennzeichnet, dass** die pflanzliche Substanz Katechole enthält.

3. Verfahren nach dem vorhergehenden Anspruch, **dadurch gekennzeichnet, dass** es einen sekundären Fraktionierungsschritt (12) enthält, der ausgehend von einer bei dem anfänglichen Fraktionierungsschritt erhaltenen polaren Fraktion durchgeführt wird.

4. Verfahren nach dem vorhergehenden Anspruch, **dadurch gekennzeichnet, dass** die bei dem sekundären Fraktionierungsschritt durchgeführte Trennung von Verbindungen gemäß dem Polaritätsgradienten erfolgt.

5. Verfahren nach einem der Ansprüche 4 bis 5, **dadurch gekennzeichnet, dass** es einen Schritt der Auswahl (13) von Elementen mit intermediärer Polarität, die aus dem sekundären Fraktionierungsschritt stammen, enthält.

6. Verfahren nach einem der vorhergehenden Ansprüche, **dadurch gekennzeichnet, dass** der anfängliche Fraktionierungsschritt an einer Umkehrphasen-Silica-C18-Fraktionierungssäule durchgeführt wird.

7. Verfahren nach einem der Ansprüche 4 bis 6, **dadurch gekennzeichnet, dass** der sekundäre Fraktionierungsschritt an einer mit Aktivkohle gefüllten Säule oder handelsüblichen Minisäulen auf Kohlenstoffbasis durchgeführt wird.

8. Verfahren nach einem der Ansprüche 4 bis 7, **dadurch gekennzeichnet, dass** es einen Schritt der Dekantierung der durch die sekundäre Fraktionierung erhaltenen Fraktionen und einen Schritt der Auswahl des bei dieser Dekantierung erhaltenen Überstandes enthält.

9. Kesselstein verhinderndes Produkt, das durch das Herstellungsverfahren nach einem der vorhergehenden Ansprüche erhalten wird.

10. Produkt nach dem vorhergehenden Anspruch, **dadurch gekennzeichnet, dass** sein Hauptbestandteil ein Masse/Ladung-Verhältnis m/z = 157,1 sowie die Summenformel C₇H₁₃N₂O₂ aufweist.

11. Produkt nach dem vorhergehenden Anspruch, **dadurch gekennzeichnet, dass** es geringfügigere Bestandteile mit der Summenformel C₉H₁₇O₂, C₈H₁₃O₃, C₁₀H₂₁O und C₁₀H₉N₂ enthält.

12. Verwendung des Produkts nach Anspruch 10 für die Zugabe zu Wasser, das in einer Vorrichtung oder Anlage umgeführt wird.

13. Verwendung des Produkts nach dem vorhergehenden Anspruch in Verbindung mit einem filmbildenden Korrosionsschutzprodukt, wie Ethanolamin oder Triethanolamin.

## Claims

1. Method for producing a scale-inhibiting product, comprising at least the following steps:
- a step of preparing (1) plant material comprising saponosides, monosaccharides and holosides and flavonoids,
- a step of infusing (6) said plant material,
- a step of filtering (7) said infusion,
- a step of preparing (9) scale-inhibiting solution from a filtrate obtained during the filtration step,
**characterized in that** the infusion step (6) is carried out by means of water brought to boiling point and **in that** the plant material originates from plants of at least one of the following families: Caryophyllaceae, Asteraceae, Illecebraceae or Urticaceae, and **in that** it comprises a step of initial polar fractionation (10) carried out on the filtrate obtained during the filtration step.

2. Method according to Claim 1, **characterized in that** the plant material comprises catechols.

3. Method according to the preceding claim, **characterized in that** it comprises a step of secondary fractionation (12) carried out on a polar fraction obtained during the step of initial fractionation.

4. Method according to the preceding claim, **characterized in that** during the secondary fractionation step the compounds are separated according to the polarity gradient.

5. Method according to either of Claims 4 and 5, **characterized in that** it comprises a step of selecting (13) the elements of intermediate polarity resulting from the step of secondary fractionation.

6. Method according to one of the preceding claims, **characterized in that** the step of initial fractionation is carried out on a C18-reversed phase silica fractionation column.

7. Method according to one of Claims 4 to 6, **characterized in that** the step of secondary fractionation is carried out on a column filled with activated charcoal or commercial mini columns based on carbon.

8. Method according to one of Claims 4 to 7, **characterized in that** it comprises a step of settling of the fractions obtained by the secondary fractionation and a step of selecting the supernatant obtained during this settling.

9. Scale-inhibiting product obtained by the production method according to one of the preceding claims.

10. Product according to the preceding claim, **characterized in that** the predominant component thereof has a mass/charge ratio m/z = 157.1 and has the empirical formula C₇H₁₃N₂O₂.

11. Product according to the preceding claim, **characterized in that** it comprises a minority of components having the empirical formulae C₉H₁₇O₂, C₈H₁₃O₃, C₁₀H₂₁O and C₁₀H₉N₂.

12. Use of the product according to Claim 10 for addition into water circulating in an apparatus or facility.

13. Use of the product according to the preceding claim combined with a film-forming corrosion resistance product such as ethanolamine or triethanolamine.
